# EUROPEAN PATENT APPLICATION

(11) **EP 0 740 905 A1**
(43) Date of publication of application: **06.11.1996**
(21) Application number: 96302637.2
(22) Date of filing: 16.04.1996
(51) Int. Cl.: A23G 9/02, A23D 9/00

(54) **Oil-and-fat feedstock for producing frozen confections and frozen confections using the same**

(30) Priority: 01.05.1995 JP 107297/95
(71) Applicant: FUJI OIL COMPANY, LIMITED, Osaka-shi, Osaka-fu 542 (JP)
(72) Inventor: Kida, Haruyasu, Kitasoma-gun, Ibaraki-ken (JP); Oda, Yoshiki, Kitasoma-gun, Ibaraki-ken (JP); Arai, Masako, Tsukuba-gum, Ibaraki-ken (JP); Tashiro, Yoichi, Kitasoma-gun, Ibaraki-ken (JP)
(74) Representative: Baverstock, Michael George Douglas

(57) **Abstract**

An oil-and-fat feedstock for producing frozen confections, such as ice cream, comprises 95 to 40% by weight of an oil-and-fat ingredient containing at least 40% by weight of SUS type triglycerides based on the weight of said oil-and-fat ingredient and 5 to 60% by weight of a lauric oil-and-fat ingredient.

## Description

The present invention relates to an oil-and-fat feedstock for producing frozen confections and frozen confections using it.

In Japan, ice cream, a representative frozen confection, is divided into three types, that is, "ice cream", "ice milk" and "lacto-ice" according to the difference in milk solids by the ministerial ordinance for milk and the like. Ice cream is usually produced through a hardening step. However, so-called "soft cream (soft-served ice cream)" is produced without a hardening step and sold by directly filling a semi-fluidized ice cream from a freezer into an ice cream cone or the like, while its ingredients are almost the same as those of hardened ice cream. On the contrary, in general, sherbet is a frozen confection mainly composed of fruit juice and, in view of milk solids, it corresponds to "lacto-ice" which contains not more than 3% of milk solids.

Raw materials of ice cream are milk, milk products, sweeteners, stabilizers, flavors and the like. Milk products include fresh cream, butter, milk fat (butter oil) and the like and they are mainly used as milk fat sources. Since fresh cream has low preservation properties, it is desired to use freshly obtained cream each time. Therefore, where fresh cream is difficult to obtain customarily butter or milk fat is used. However, when butter is used in a large amount, butter smell is caused and this should be avoided. The same is also more or less caused by milk fat. On the other hand, for raw materials of ice cream in a broad sense, vegetable oil-and-fat ingredients are used as oil-and-fat sources instead of fresh cream, butter or milk as well as skimmed milk, skimmed milk powder and whole milk powder are used as non-fat milk solid sources. In particular, milk powders are often used because they have good preservation properties.

Regarding raw materials of ice cream in a broad sense, coconut oil, palm oil, hydrogenated rapeseed oil and the like have mainly been used as vegetable oil-and-fat ingredients as oil-and-fat sources. For example, JP-A 57-36943 proposed to use a mixed oil-and-fat feedstock for frozen confections which is composed of 60 to 80% of coconut oil and 40 to 20% of palm oil. However, when a larger amount of coconut oil is used, mouthfeel and taste tend to be lost, while sharp melting properties can be obtained. On the other hand, although palm oil and rapeseed oil are inexpensive, their melting properties in the mouth are undesirable and they provide inferior texture and structure to frozen confections. JP-A 4-316453 proposed to use cacao butter in frozen confections so as to provide sharp melting properties in the mouth. However, fat ingredients mainly composed of SUS type triglycerides (2-unsaturated-1,3-disaturated triglycerides) such as cacao butter cause insufficient emulsification and, for example, as is indicated hereinafter, stability of a liquid mix prepared during production of ice cream by using such a fat ingredient is reduced and causes various defects. For example, the liquid mix often plasticizes and tends to cause demulsification during a freezing step, which results in aggregation of oil-and-fat ingredients and heavy melting properties of products in the mouth. In particular, when the fat content is higher, this tendency becomes more significant.

The main object of the present invention is to improve on the above defects of frozen confections.

This object as well as other objects and advantages of the present invention will become apparent to those skilled in the art from the following description.

In order to improve on the above defects, the present inventors have studied the fundamental functions of oil-and-fat ingredients in detail. As a result, it has been found that the above defects can be improved on by using an oil-and-fat feedstock comprising a certain amount of lauric oil-and-fat ingredient and an oil-and-fat ingredient which is rich in SUS type triglycerides. By using this mixed oil-and-fat feedstock, the present inventors have succeeded in producing an ice cream having good taste and melting properties in the mouth.

According to the present invention, there is provided an oil-and-fat feedstock for producing frozen confections which comprises 95 to 40% by weight of an oil-and-fat ingredient containing at least 40% by weight of SUS type triglycerides based on the weight of said oil-and-fat ingredient and 5 to 60% by weight of a lauric oil-and-fat ingredient.

The present invention also provide a frozen confection comprising as a fat ingredient the above oil-and-fat feedstock.

In the present invention, the term "frozen confections" includes all frozen confections whose basic raw materials are oil-and-fat ingredients and water. In particular, the frozen confections of the present invention include ice cream and ice cream-type frozen desserts produced by using oil-and-fat ingredients, water, sweeteners and proteins or milk solids together with stabilizers and/or emulsifiers. In frozen confections, water is frozen to form ice crystals which are responsible for the skeleton and shape retention of frozen confections and therefore the compositions thereof are different from that of whipped cream.

The oil-and-fat feedstock of the present invention can be obtained by mixing an oil-and-fat ingredient containing at least 40% by weight of SUS type triglycerides and a lauric oil-and-fat ingredient.

Examples of the oil-and-fat ingredient which is rich in SUS type triglycerides include palm oil, cacao butter, illippe butter, shea butter, their fractionated and hydrogenated products and interesterified fats and oils obtained by selectively introducing saturated fatty acid residues into the 1 and 3-positions of fats and oils which are rich in unsaturated fatty acid residues at the 2-position. Preferably, fatty acid residues of SUS type triglycerides have 8 to 22 carbon atoms and may contain a small amount of short chain fatty acid residues. Examples of unsaturated fatty acid residues at the 2-position include residues of oleic acid, linoleic acid, and linolenic acid. The above oil-and-fat ingredient containing at least 40% by weight of SUS type triglycerides can be obtained from these oil-and-fat ingredients which are rich in SUS type triglycerides by fractionation and the like to make up the amount of SUS type triglycerides therein to at least 40% by weight. In the present invention, a palm mid fraction which is obtained by subjecting palm oil to fractionation to remove high and low melting point fractions therefrom is preferred. When the amount of SUS type triglycerides is less than 40% by weight, the melting properties in the mouth tend to deteriorate.

Examples of the lauric oil-and-fat ingredient include coconut oil, palm kernel oil, and their hydrogenated, fractionated and interesterified products.

According to the present invention, by using the oil-and-fat feedstock comprising 95 to 40% by weight of the above oil-and-fat ingredient containing at least 40% by weight of SUS type triglycerides and 5 to 60% by weight of the lauric oil-and-fat ingredient, the mechanical properties of products after mixing and freezing can be stabilized and frozen confections having sharp melting properties in the mouth and a good body of taste and mouthfeel can be obtained.

When the amount of the oil-and-fat ingredient containing at least 40% by weight of SUS type triglycerides is less than 40% by weight, a product obtained therefrom lacks body of taste and mouthfeel. On the other hand, when the about of the oil-and-fat ingredient is more than 95% by weight, melting properties deteriorate and emulsion stability and freezing properties of a liquid mix prepared therefrom tend to become inferior.

In the present invention, a small amount of other oil-and-fat ingredients can be added. Examples thereof include hydrogenated rapeseed oil and liquid fats.

The oil-and-fat feedstock of the present invention can be used for producing frozen confections according to a per se known method. Hereinafter, the production of frozen confections are illustrated using for an example ice cream. Ice cream comprises milk fat, milk solids, sweetener, stabilizer, emulsifier, flavor, colouring agent and water. Milk fat is effective for providing a milk flavor and a smooth texture as well as a high nutritive value as a fat component in the product. Usually, milk fat is used in an amount of up to about 10% by weight based on the total weight of the product and an excess amount of milk fat causes a too heavy taste and adversely effects taste and mouthfeel. Therefore, when apart or all of the milk fat is replaced with the oil-and-fat feedstock of the present invention, ice cream having very good taste and mouthfeel can be obtained. In addition, when a larger amount of the fat ingredient, for example, about up to 20% by weight of the oil-and-fat feedstock for producing frozen confections of the present invention based on the total weight of the product is used, fatty taste and flavor are increased to give an ice cream having a very good and pleasant taste.

Non-fat milk solids are effective for improving the texture of ice cream and increasing overrun as well as providing milky flavor to the ice cream. As milk solids, there are, for example, skimmed milk, skimmed milk powder and whole milk powder.

A sweetener is effective for improving the texture by increasing the viscosity of the mix in addition to providing sweetness. As a sweetener, sucrose is most commonly used. Other sweeteners such as inverted sugar, mixed liquid sugar and thick malt syrup can be used. Usually, a sweetener is added in an amount of about 13 to 17% by weight based on the total weight of the product.

A stabilizer is effective for providing a smooth texture and suitable viscosity to control overrun. Examples of stabilizers include gums such as guar gum, locust bean gum, xanthan gum and gum arabic, carrageenin, sodium alginate, sodium carboxymethylcellulose, water-soluble hemicellulose, gelatin, agar, pectin, corn starch and various salts such as phosphates. Usually, the stabilizer is added in an amount of about 0.1 to 1.0% by weight based on the total weight of the product. However, sometimes, a strong viscous mouthfeel is caused depending upon the particular kind of stabilizer used. In such cases the amount of stabilizer should be decreased.

An emulsifier provides a smooth texture, maintains dispersion of the oil-and-fat ingredients and suitably aggregates oil-and-fat ingredients during the freezing step. Known emulsifiers can be used and examples thereof include lecithin or lecithin fractionated with an alcohol, lecithin partially hydrolyzed with an acid, alkali or enzyme,
sugar fatty acid esters, propylene glycol fatty acid esters, sorbitan fatty acid esters, glycerin fatty acid esters, polyglycerol fatty acid esters and various organic acid monoglycerides such as acetic acid monoglyceride, tartaric acid monoglyceride, acetic acid tartaric acid mixed monoglyceride, citric acid monoglyceride, diacetyltartaric acid monoglyceride, lactic acid monoglyceride, succinic acid monoglyceride and malic acid monoglyceride.
Usually, the emulsifier is added in an amount of about 0.1 to 0.5% by weight based on the total weight of the product.

Both flavor and coloring agents are important additives for ice cream. Since ice cream is a kind of luxury product, it is necessary to select these additives according to consumers' tastes. There are various flavors. However, vanilla flavor is the most popular and chocolate and strawberry flavors are often used.

A standard process for producing ice cream using the above raw materials is as follows.
1. The raw materials are blended together.
2. Then, the raw materials are mixed and dissolved to prepare a liquid ice cream mix. In this step, powder raw materials are apt to form undissolved lumps and therefore the mixing and dissolution thereof should be carefully carried out. An elevated temperature is not preferred and, usually, the mixing and dissolution are carried out at 50 to 60°C.
3. The mix thus prepared is homogenized. Homogenization conditions such as the homogenizing pressure cannot generally be defined and vary depending upon the particular homogenizer used e.g. a homogenizer having a single pressure or double pressure pump. Usually, in the case of a homogenizer having a single pressure pump, the homogenization pressure is 100 to 180 kg/cm². In the case of a homogenizer having a double pressure pump, the homogenization pressure at the first valve is about 100 kg/cm² and that at the second valve is about 40 to 70 kg/cm². Usually, the homogenization temperature is about 50 to 70°C.
4. Then, the homogenized mix is pasteurized or sterilized. Usually, pasteurization is carried out at 60 to 75°C for 15 to 60 minutes. For sterilization, the mix is subjected to UHT (ultra-high-temperature) sterilization treatment according to a conventional manner, e.g., at 130 to 150°C for 1 to 5 seconds.
5. The pasteurized or sterilized mix is cooled and then temporarily stored at 0 to 5°C for 3 to 24 hours (aging or storage). By this aging, respective ingredients in the mix are stabilized.
6. Then, a flavor is added to the mix with stirring.
7. Then, the mix is frozen. In this step, the mix is rapidly frozen in a freezer and a suitable amount of air is incorporated into the mix during freezing to disperse fine air cells, ice crystalline particles and fat particles in the mix to form a semi-fluidized soft ice cream. This step influences the smoothness of texture and mouthfeel of the ice cream and therefore it is a very important step.
8. The resultant product is filled into a given container, packaged, and rapidly cooled at -20 to -30°C to mold to the desired shape.
9. Finally, the shaped product is hardened and stored until shipment.

The following Examples and Comparative Examples further illustrate the present invention in detail but are not to be construed to limit the scope thereof. In these Examples and Comparative Examples, ice cream was produced according to a known method as indicated above and all the "parts" and "percents" are by weight unless otherwise stated.

### Example 1

| Oil-and-fat feedstock | |
|---|---|
| Ingredients | % |
| Palm mid fraction¹⁾ | 91.8 |
| Fully hydrogenated coconut oil²⁾ | 8.4 |

| Formulation of ice cream | Parts |
|---|---|
| The above oil-and-fat feedstock | 12.0 |
| Skimmed milk powder | 10.0 |
| Powdered malt syrup | 5.0 |
| Sugar (granulated) | 13.0 |
| Water | 60.0 |
| Emulsifier³⁾ | 0.3 |
| Stabilizer⁴⁾ | 0.4 |

| | |
|---|---|
| 1) : Iodine value (IV) 45, melting (slipping) point 26.0°C SUS triglyceride content 60.3% | |
| 2) : IV 0.6, melting (slipping) point 32.2°C | |
| 3) : manufactured and sold by Riken Vitamin, Japan, under the trade name of "Emulgy MS" | |
| 4) : manufactured and sold by Saneigen, Japan, under the trade name of "Sanbest NN-305" | |

| Results | |
|---|---|
| Viscosity of mix (5°C, 1 day) | 380 cp (good) |
| Melting properties in the mouth | good |
| Mouthfeel | good |
| Taste and flavor | good |
| Texture | good |

### Example 2

| Oil-and-fat feedstock | |
|---|---|
| Ingredients | % |
| Palm mid fraction¹⁾ | 70.0 |
| Fully hydrogenated coconut oil²⁾ | 30.0 |

| Formulation of ice cream | Parts |
|---|---|
| The above oil-and-fat feedstock | 12.0 |
| Skimmed milk powder | 10.0 |
| Powdered malt syrup | 5.0 |
| Sugar (granulated) | 13.0 |
| Water | 60.0 |
| Emulsifier³⁾ | 0.3 |
| Stabilizer⁴⁾ | 0.4 |

| | |
|---|---|
| 1) : IV 45, melting (slipping) point 26.0°C SUS triglyceride content 60.3% | |
| 2) : IV 0.6, melting (slipping) point 32.2°C | |
| 3) : manufactured and sold by Riken Vitamin, Japan, under the trade name of "Emulgy MS" | |
| 4) : manufactured and sold by Saneigen, Japan, under the trade name of "Sanbest NN-305" | |

| Results | |
|---|---|
| Viscosity of mix (5°C, 1 day) | 350 cp (good) |
| Melting properties in the mouth | good |
| Mouthfeel | good |
| Taste and flavor | good |
| Texture | good |

### Example 3

| Oil-and-fat feedstock | |
|---|---|
| Ingredients | % |
| Palm mid fraction¹⁾ | 60.0 |
| Fully hydrogenated coconut oil²⁾ | 40.0 |

| Formulation of ice cream | Parts |
|---|---|
| The above oil-and-fat feedstock | 12.0 |
| Skimmed milk powder | 10.0 |
| Powdered malt syrup | 5.0 |
| Sugar (granulated) | 13.0 |
| Water | 60.0 |
| Emulsifier³⁾ | 0.3 |
| Stabilizer⁴⁾ | 0.4 |

| | |
|---|---|
| 1) : IV 34, melting (slipping) point 30.5°C SUS triglyceride content 81.8% | |
| 2) : IV 0.6, melting (slipping) point 32.2°C | |
| 3) : manufactured and sold by Riken Vitamin, Japan, under the trade name of "Emulgy MS" | |
| 4) : manufactured and sold by Saneigen, Japan, under the trade name of "Sanbest NN-305" | |

| Results | |
|---|---|
| Viscosity of mix (5°C, 1 day) | 340 cp (good) |
| Melting properties in the mouth | good |
| Mouthfeel | good |
| Taste and flavor | good |
| Texture | good |

### Example 4

| Oil-and-fat feedstock | |
|---|---|
| Ingredients | % |
| Cacao butter¹⁾ | 50.0 |
| Hydrogenated palm kernel oil²⁾ | 50.0 |

| Formulation of ice cream | Parts |
|---|---|
| The above oil-and-fat feedstock | 8.0 |
| Skimmed milk powder | 8.0 |
| Powdered malt syrup | 5.0 |
| Sugar (granulated) | 13.0 |
| Water | 66.0 |
| Emulsifier³⁾ | 0.3 |
| Stabilizer⁴⁾ | 0.4 |

| | |
|---|---|
| 1) : IV 34.5, melting (slipping) point 33.8°C SUS triglyceride content 80.6% | |
| 2) : IV 0.6, melting (slipping) point 34.0°C | |
| 3) : manufactured and sold by Riken Vitamin, Japan, under the trade name of "Emulgy MS" | |
| 4) : manufactured and sold by Saneigen, Japan, under the trade name of "Sanbest NN-305" | |

| Results | |
|---|---|
| Viscosity of mix (5°C, 1 day) | 270 cp (good) |
| Melting properties in the mouth | good |
| Mouthfeel | good |
| Taste and flavor | good |
| Texture | good |

### Example 5

| Oil-and-fat feedstock | |
|---|---|
| Ingredients | % |
| Palm mid fraction¹⁾ | 50.0 |
| Coconut oil²⁾ | 33.3 |
| Hydrogenated rapeseed oil³⁾ | 16.7 |

| Formulation of ice cream | Parts |
|---|---|
| The above oil-and-fat feedstock | 6.0 |
| Skimmed milk powder | 8.0 |
| Powdered malt syrup | 5.0 |
| Sugar (granulated) | 13.0 |
| Water | 68.0 |
| Emulsifier⁴⁾ | 0.3 |
| Stabilizer⁵⁾ | 0.4 |

| | |
|---|---|
| 1) : IV 50, melting (slipping) point 25.0°C SUS triglyceride content 48.0% | |
| 2) : IV 8.5, melting (slipping) point 24.0°C | |
| 3) : IV 72.8, melting (slipping) point 24.0°C | |
| 4) : manufactured and sold by Riken Vitamin, Japan, under the trade name of "Emulgy MS" | |
| 5) : manufactured and sold by Saneigen, Japan, under the trade name of "Sanbest NN-305" | |

| Results | |
|---|---|
| Viscosity of mix (5°C, 1 day) | 220 cp (good) |
| Melting properties in the mouth | good |
| Mouthfeel | good |
| Taste and flavor | good |
| Texture | good |

### Comparative Example 1

| Oil-and-fat feedstock | |
|---|---|
| Ingredients | % |
| Palm mid fraction¹⁾ | 33.3 |
| Fully hydrogenated coconut oil²⁾ | 66.7 |

| Formulation of ice cream | Parts |
|---|---|
| The above oil-and-fat feedstock | 12.0 |
| Skimmed milk powder | 10.0 |
| Powdered malt syrup | 5.0 |
| Sugar (granulated) | 13.0 |
| Water | 60.0 |
| Emulsifier³⁾ | 0.3 |
| Stabilizer⁴⁾ | 0.4 |

| | |
|---|---|
| 1) : IV 45, melting (slipping) point 26.0°C SUS triglyceride content 60.3% | |
| 2) : IV 0.6, melting (slipping) point 32.2°C | |
| 3) : manufactured and sold by Riken Vitamin, Japan, under the trade name of "Emulgy MS" | |
| 4) : manufactured and sold by Saneigen, Japan, under the trade name of "Sanbest NN-305" | |

| Results | |
|---|---|
| Viscosity of mix (5°C, 1 day) | 320 cp (good) |
| Melting properties in the mouth | good |
| Mouthfeel | too light |
| Taste and flavor | no body |
| Texture | good |

### Comparative Example 2

| Oil-and-fat feedstock | |
|---|---|
| Ingredients | % |
| Palm oil¹⁾ | 60.0 |
| Fully hydrogenated coconut oil²⁾ | 40.0 |

| Formulation of ice cream | Parts |
|---|---|
| The above oil-and-fat feedstock | 12.0 |
| Skimmed milk powder | 10.0 |
| Powdered malt syrup | 5.0 |
| Sugar (granulated) | 13.0 |
| Water | 60.0 |
| Emulsifier³⁾ | 0.3 |
| Stabilizer⁴⁾ | 0.4 |

| | |
|---|---|
| 1) : IV 52, melting (slipping) point 35.8°C SUS triglyceride content 32.6% | |
| 2) : IV 0.6, melting (slipping) point 32.2°C | |
| 3) : manufactured and sold by Riken Vitamin, Japan, under the trade name of "Emulgy MS" | |
| 4) : manufactured and sold by Saneigen, Japan, under the trade name of "Sanbest NN-305" | |

| Results | |
|---|---|
| Viscosity of mix (5°C, 1 day) | 380 cp (good) |
| Melting properties in the mouth | bad |
| Mouthfeel | heavy |
| Taste and flavor | - |
| Texture | rough |

### Comparative Example 3

| Oil-and-fat feedstock | |
|---|---|
| Ingredients | % |
| Palm mid fraction¹⁾ | 95.8 |
| Fully hydrogenated coconut oil²⁾ | 4.2 |

| Formulation of ice cream | Parts |
|---|---|
| The above oil-and-fat feedstock | 12.0 |
| Skimmed milk powder | 10.0 |
| Powdered malt syrup | 5.0 |
| Sugar (granulated) | 13.0 |
| Water | 60.0 |
| Emulsifier³⁾ | 0.3 |
| Stabilizer⁴⁾ | 0.4 |

| | |
|---|---|
| 1) : IV 34, melting (slipping) point 30.5°C SUS triglyceride content 81.8% | |
| 2) : IV 0.6, melting (slipping) point 32.2°C | |
| 3) : manufactured and sold by Riken Vitamin, Japan, under the trade name of "Emulgy MS" | |
| 4) : manufactured and sold by Saneigen, Japan, under the trade name of "Sanbest NN-305" | |

| Results | |
|---|---|
| Viscosity of mix (5°C, 1 day) | 900 cp (plasticized) |
| Melting properties in the mouth | bad |
| Mouthfeel | oily |
| Taste and flavor | - |
| Texture | rough |

### Comparative Example 4

| Oil-and-fat feedstock | |
|---|---|
| Ingredients | % |
| Fully hydrogenated coconut oil¹⁾ | 100.0 |

| Formulation of ice cream | Parts |
|---|---|
| The above oil-and-fat feedstock | 6.0 |
| Skimmed milk powder | 8.0 |
| Powdered malt syrup | 5.0 |
| Sugar (granulated) | 13.0 |
| Water | 68.0 |
| Emulsifier²⁾ | 0.3 |
| Stabilizer³⁾ | 0.4 |

| | |
|---|---|
| 1) : IV 0.6, melting (slipping) point 32.2°C | |
| 2) : manufactured and sold by Riken Vitamin, Japan, under the trade name of "Emulgy MS" | |
| 3) : manufactured and sold by Saneigen, Japan, under the trade name of "Sanbest NN-305" | |

| Results | |
|---|---|
| Viscosity of mix (5°C, 1 day) | 300 cp (good) |
| Melting properties in the mouth | good |
| Mouthfeel | too light |
| Taste and flavor | no body |
| Texture | good |

As described hereinabove, when a frozen confection such as ice cream is produced by using the oil-and-fat feedstock of the present invention, mechanical properties of the mix upon mixing and freezing are very stable and a frozen confection having sharp melting properties in the mouth and good body of taste and mouthfeel can be obtained.

## Claims

1. An oil-and-fat feedstock for producing frozen confections which comprises 95 to 40% by weight of an oil-and-fat ingredient containing at least 40% by weight of SUS type triglycerides based on the weight of said oil-and-fat ingredient and 5 to 60% by weight of a lauric oil-and-fat ingredient.

2. An oil-and-fat feedstock according to claim 1, wherein the oil-and-fat ingredient containing at least 40% by weight of SUS type triglycerides is a palm mid fraction.

3. An oil-and-fat feedstock according to claim 1, wherein the feedstock is used for the production of ice cream.

4. A frozen confection comprising an oil-and-fat feedstock according to claim 1.

5. A frozen confection according to claim 4, wherein the oil-and-fat ingredient containing at least 40% by weight of SUS type triglycerides of the oil-and-fat feedstock is a palm mid fraction.

6. A frozen confection according to claim 4 which is ice cream.

7. A process for producing a frozen confection comprising blending an oil-and-fat feedstock according to claim 1 with other raw materials.

8. Use of an oil-and-fat feedstock as claimed in claim 1 for the production of a frozen confection.
